(19) **Europäisches Patentamt European Patent Office Office européen des brevets**

(11) **EP 4 237 747 B1**

(12) **FASCICULE DE BREVET EUROPEEN**

(45) Date de publication et mention de la délivrance du brevet:
**08.01.2025 Bulletin 2025/02**

(21) Numéro de dépôt: **21777304.3**

(22) Date de dépôt: **13.09.2021**

(51) Classification Internationale des Brevets (IPC):
*F23C 6/04* (2006.01)   *F02C 3/14* (2006.01)
*F23C 7/06* (2006.01)   *F23C 9/00* (2006.01)
*F23C 99/00* (2006.01)   *F23L 15/04* (2006.01)
*F23R 3/42* (2006.01)   *F23R 3/44* (2006.01)
*F23R 3/16* (2006.01)   *F23R 3/54* (2006.01)

(52) Classification Coopérative des Brevets (CPC):
**F23C 9/006; F02C 3/14; F23C 6/04; F23C 7/06; F23C 99/00; F23L 15/04; F23R 3/16; F23R 3/42; F23R 3/44; F23R 3/54;** F05D 2250/82; F23C 2900/06041; F23C 2900/99001; Y02E 20/12; Y02E 20/14; (Cont.)

(86) Numéro de dépôt international:
**PCT/EP2021/075110**

(87) Numéro de publication internationale:
**WO 2022/089822 (05.05.2022 Gazette 2022/18)**

(54) **DISPOSITIF DE COMBUSTION AYANT UNE CHAMBRE DE COMBUSTION SANS FLAMME, UTILISATION D'UN TEL DISPOSITIF ET APPAREIL DE PRODUCTION D'ÉLÉCTRICITÉ OU DE COGÉNÉRATION D'ÉNERGIE COMPORTANT UN TEL DISPOSITIF**

VERBRENNUNGSVORRICHTUNG MIT FLAMMENLOSER BRENNKAMMER, VERWENDUNG SOLCH EINER VORRICHTUNG UND ELEKTRIZITÄTSERZEUGUNGS- ODER KRAFT-WÄRME-KOPPLUNGSVORRICHTUNG MIT SOLCH EINER VORRICHTUNG

COMBUSTION DEVICE HAVING A FLAMELESS COMBUSTION CHAMBER, USE OF SUCH A DEVICE AND ELECTRICITY PRODUCTION OR ENERGY COGENERATION APPARATUS COMPRISING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2020 BE 202005775**

(43) Date de publication de la demande:
**06.09.2023 Bulletin 2023/36**

(73) Titulaires:
• **Mitis S.A.**
**4280 Hannut (BE)**
• **Université Libre de Bruxelles**
**1050 Bruxelles (BE)**

(72) Inventeurs:
• **DELANAYE, Michel**
**4280 Hannut (BE)**
• **PARENTE, Alessandro**
**1000 Bruxelles (BE)**

(74) Mandataire: **AWA Benelux**
**Parc d'affaires Zénobe Gramme - Bât. K Square des Conduites d'Eau 1-2 4020 Liège (BE)**

(56) Documents cités:
WO-A1-03/091626    CN-A- 105 299 692
CN-U- 203 907 671

(52) Classification Coopérative des Brevets (CPC):
(Cont.)Y02E 20/34

## Description

## Objet de l'invention

La présente invention a trait à un dispositif de combustion et à un appareil de production d'électricité ou de cogénération d'énergie comprenant ledit dispositif. On entend par dispositif de combustion un dispositif comportant une ou plusieurs chambres ou sous-chambres de combustion.

En particulier, l'invention se rapporte à un système de combustion en régime « sans flamme » fonctionnant par exemple avec un carburant gazeux couplé à un récupérateur de chaleur et intégré dans une micro-turbine à gaz fonctionnant au gaz naturel.

## Arrière-plan technologique et état de la technique

Il est connu qu'une chambre combustion alimentant une turbine fonctionnant dans le régime dit d'oxydation "sans flamme" (ou "flameless" ou FLOX®) permette d'atteindre des émissions de NOx extrêmement faibles, par exemple <10 ppm.

La combustion sans flamme, dite « MILD combustion » (acronyme pour *Moderate or Intense Low-oxygen Dilution*, ou dilution à faible teneur en oxygène, modérée ou intense), est un mode de combustion capable de fournir une efficacité de combustion élevée avec de très faibles émissions de polluants, et ce même avec un préchauffage élevé de l'air. En plus du rendement énergétique amélioré associé au processus de récupération de chaleur, la combustion MILD assure ainsi un environnement de combustion homogène, conséquence de la recirculation intense des gaz d'échappement. Cela se traduit par une réduction localisée du niveau d'$O_2$, conduisant à une zone de réaction répartie et à une réduction des températures de travail par rapport à la combustion à flamme classique. Les niveaux de température réduits et l'environnement réactif homogène ont des effets positifs sur la formation de polluants (NOx, suie), qui sont considérablement réduits, et sur la résistance des matériaux, grâce à l'absence de forts gradients de température. La combustion MILD assure une grande flexibilité du carburant, ce qui en fait une technologie idéale pour les carburants suivants : les carburants à faible pouvoir calorifique, les déchets industriels à haut pouvoir calorifique, les combustibles à base d'hydrogène, les carburants liquides (par ex. kérosène, essence, diesel, fuel) et les carburants solides.

Du point de vue des interactions turbulence-chimie, la combustion MILD est caractérisée par un fort couplage entre les échelles de la dynamique chimique et de la dynamique des fluides. Le nombre de Damköhler Da (ratio entre temps caractéristique de la dynamique des fluides et temps des réactions chimiques) en MILD est de l'ordre de l'unité, indiquant que le temps des réactions chimiques n'est pas négligeable par rapport aux temps gouvernant la dynamique des fluides.

En combustion conventionnelle, le processus global est contrôlé par le transfert de chaleur et de masse, ce qui conduit à une région de réaction bien définie avec de forts gradients de température et d'espèces et des valeurs de Da supérieures à l'unité. Dans une combustion sans flamme, la recirculation des gaz d'échappement (aussi appelés gaz de combustion) conduit donc à une distribution plus homogène de la température et des espèces.

De manière générale, la combustion sans flamme est très stable et silencieuse et pourrait donc être utilisée pour des applications avec des turbines à gaz, où les opérations classiques peuvent entraîner des instabilités thermo-acoustiques ("bourdonnements") et des contraintes importantes.

On connaît des conceptions de chambre de combustion sans flamme pour des applications de (micro-)turbine à gaz. Dans une application de micro-turbine à gaz, la température des fumées en sortie de chambre de combustion est limitée par la tolérance du matériau utilisé pour fabriquer la turbine, typiquement de 800°C à 1050°C, et en particulier de 950°C à 1050°C. Cette condition induit l'usage d'un excès d'air très important par rapport à la quantité stoechiométrique d'air nécessaire à brûler le fuel.

Dans les applications concernées par la présente invention, le ratio lambda (débit massique d'air/débit massique d'air stoechiométrique ou 1 + excès d'air) pourrait être très élevé (significativement plus grand que 1) afin de permettre la diminution de température des gaz compatible avec l'entrée de la turbine. Il en résulte une grande quantité d'$O_2$ disponible pour la combustion, ce qui semble antagoniste avec les conditions idéales de mise en oeuvre du régime de combustion sans flamme qui dépend principalement de la dilution d'$O_2$ dans le mélange.

Par ailleurs, une autre condition favorable à l'apparition du régime de combustion sans flamme concerne le préchauffage de l'air comburant à une température suffisante afin d'assurer un auto-allumage aisé du mélange. L'utilisation d'un récupérateur de chaleur présent dans le cycle de la turbine à gaz avec régénération est avantageuse pour assurer cette fonctionnalité.

De nombreuses conceptions de chambres de combustion permettant d'opérer dans un régime sans flamme ont été proposées. On peut citer par exemple la chambre de combustion pour turbine à gaz décrite dans le document WO 2003/091626. Cette chambre est configurée de sorte à présenter un tube guide interne ouvert à ses deux extrémités et qui permet d'assurer la recirculation d'une partie importante des gaz de combustion dans la chambre, l'autre partie des gaz étant évacuée en aval de la chambre. Cette recirculation permet de maintenir un régime d'oxydation sans flamme dans la chambre. Ces solutions connues permettent certes d'avoir des niveaux NOx faibles, mais elles ne sont pas conçues pour atteindre des niveaux de CO faible.

Le document CN105299692A divulgue un dispositif de chambre de combustion d'un équipement de désinfection des fumées sur une grande surface et de prévention des épidémies. Le dispositif de chambre de combustion comprend un tube de flamme, une section de diffusion, une plaque de distribution d'air, un chemisage d'air froid et un chemisage de gaz combustible, un tube de refroidissement (ou de retour de gaz) et une enveloppe externe. Le canon de flamme est soudé à la face d'extrémité d'entrée d'air dans le chemisage de gaz combustible par l'intermédiaire de quatre plaques de support. Le chemisage de gaz combustible est boulonné à la plaque de distribution d'air. La section de diffusion est disposée à l'extérieur du canon à flamme par une gaine et installée de manière fixe à la plaque de distribution d'air et au chemisage d'air conditionné par l'intermédiaire de boulons. L'air entre à partir de la section de diffusion, une partie entrant dans la chambre de combustion pour la combustion, une partie entrant de la zone entre le tube de flamme et le chemisage de gaz combustible, pour être mélangé avec la flamme à haute température, et une partie entre dans l'orifice de distribution d'air sur la plaque de distribution d'air et se mélange avec le flux d'air à haute température et grande vitesse venant du tube de retour de gaz dans le tube d'air froid pour obtenir un flux d'air adapté à la pulvérisation. Le désinfectant injecté forme alors un brouillard qui est pulvérisé à la sortie de l'appareil.

Le tube de refroidissement est concentrique avec le chemisage de gaz combustible de sorte que la course du gaz combustible est allongée, le temps de mélange est prolongé avec une longueur de la structure totale considérablement réduite.

Les documents CN 105 299 692 B et CN 203 907 671 U montre des turbines à gaz ayant les caractéristiques spécifiées dans le préambule de la revendication 1.

### But de l'invention

L'invention a pour objectif de pallier au moins un des inconvénients de l'état de la technique susmentionné, en particulier que les gaz d'échappement en sortie du dispositif de combustion ont non seulement des niveaux de NOx faible (par exemple < 10 mg/kWh[1] de préférence < 5 mg/kWh) mais aussi de CO faible (par exemple < 10 mg/kWh).

Plus particulièrement, l'invention a pour but de fournir un dispositif de combustion stable et très efficace en rendement, configuré pour produire des gaz de combustion (échappement) compatibles avec une [1] mg/kWh à 0% d'O2. kWh = énergie injectée sur base du PCI du fuel température d'entrée comprise entre 800° et 1050 C°, en particulier entre 950° et 1050 C° tout en maintenant des niveaux de NOx et CO faibles comme ceux mentionnés ci-dessus.

L'invention a encore plus particulièrement pour but une conception de dispositif de combustion permettant de prendre en compte de grandes valeurs de lambda (excès d'air) tout en permettant l'apparition de la combustion sans flamme.

### Principaux éléments caractéristiques de l'invention

La présente invention se rapporte à un dispositif de combustion, selon la revendication 1, pour un appareil de production d'électricité ou de cogénération d'énergie, ledit appareil comprenant une turbine à gaz, en particulier une micro-turbine à gaz, alimentée par ledit dispositif, ledit dispositif étant adapté pour un régime de combustion du type « sans flamme », et comprenant :

- un tube externe ;
- un tube de combustion, formant une zone de combustion adaptée pour la combustion sans flamme d'un mélange d'air comburant et de carburant, ledit tube de combustion étant concentrique avec le tube externe, en communication avec des moyens d'injection de carburant et des moyens d'injection d'air, disposés à une première extrémité du tube de combustion, dite extrémité avant, et fermé par un fond à une seconde extrémité du tube de combustion, dite extrémité arrière, ledit fond étant solidaire dudit tube de combustion et étanche ;
- les moyens d'injection de carburant comportant au moins un premier orifice, dit orifice d'injection de carburant ;
- les moyens d'injection d'air comportant au moins un second orifice, dit orifice d'injection d'air ;
- des moyens d'évacuation des gaz de combustion ;
- une paroi de fermeture couvrant l'extrémité avant du tube de combustion et connectée aux moyens d'injection d'air et de carburant ;
- le tube de combustion étant sensiblement de forme cylindrique en un seul volume interne, apte à permettre la recirculation des gaz dans un régime de combustion sans flamme ;
- les moyens d'évacuation de gaz de combustion comprenant au moins une ouverture disposée à l'extrémité avant du tube de combustion sensiblement de forme cylindrique, ladite ouverture étant délimitée d'une part par une extrémité de la paroi cylindrique longitudinale du tube de combustion proximale de la paroi de fermeture et d'autre part par ladite paroi de fermeture, l'écoulement et l'évacuation des gaz de combustion étant assurés entre ladite paroi longitudinale et le tube externe;

caractérisé par

une chemise tubulaire disposée concentriquement entre le tube de combustion et le tube externe, connectée à la paroi de fermeture et positionnée en vis-à-vis de l'ouverture des moyens d'évacuation, pour former une zone annulaire, dite zone de recombinaison, permettant de prolonger le temps de séjour des gaz de combustion s'échappant par l'ouverture.

Des modes d'exécution avantageux de l'invention sont spécifiées dans les revendications dépendantes.

L'invention se rapporte également à une utilisation du dispositif de combustion selon l'invention, dans laquelle un flux d'air est injecté dans le dispositif avec une vitesse comprise entre 60 et 120m/s, de manière à obtenir un taux de recirculation des fluides mE/(mA+mF) supérieur à 1,3, où mE, mA et mF représentent respectivement les débits massiques des gaz brûlés et recirculés dans la zone de combustion, et d'air comburant et de carburant introduits dans la zone de combustion (4).

La présente invention se rapporte également à un appareil de production d'électricité ou de cogénération d'énergie comportant un dispositif de combustion selon l'invention.

Avantageusement, l'appareil de production d'électricité ou de cogénération d'énergie comprend un échangeur de chaleur permettant de récupérer l'énergie thermique des gaz de combustion produite dans le dispositif de combustion, pour préchauffer l'air d'admission alimentant le dispositif de combustion.

De préférence, l'échangeur de chaleur comprend un premier circuit en communication fluidique avec une section aval d'une turbine, en particulier une micro-turbine, et un deuxième circuit en communication fluidique avec une section amont du dispositif de combustion.

Selon la présente invention, le ratio lambda peut atteindre des valeurs aussi élevées que 6-8, ce qui permet une diminution de température suffisante des gaz d'échappement compatible avec l'entrée dans la turbine. L'antagonisme apparent avec la nécessité d'un régime de combustion sans flamme est résolu par la géométrie optimalisée de la chambre de combustion qui permet une dilution efficace de l'oxygène dans le mélange.

Les caractéristiques propres à l'invention sont avantageuses en ce qu'elles permettent d'avoir un dispositif de combustion compatible avec l'utilisation de différents carburants tels que gaz naturel, biogaz, gaz d'origine synthétique (syngaz, etc.), etc. En outre, la combustion sans flamme est stable.

### Description brève des figures

D'autres caractéristiques et avantages de la présente invention seront mieux compris à l'aide des dessins et de la description ci-après.

La figure 1 montre une vue en perspective (externe) d'un dispositif de combustion sans flamme selon l'invention.

La figure 2 représente une vue tridimensionnelle en coupe longitudinale du dispositif de combustion sans flamme selon l'invention.

La figure 3 montre une vue tridimensionnelle en coupe transversale du dispositif de combustion sans flamme selon l'invention, prise au niveau du plénum.

La figure 4 montre deux vues en perspective des orifices d'injection de carburant et d'air du dispositif de combustion sans flamme selon l'invention.

La figure 5 est une représentation schématique en coupe longitudinale du dispositif de combustion sans flamme selon l'invention, dans laquelle les écoulements sont représentés par des flèches.

La figure 6 est une représentation schématique de l'appareil de cogénération d'énergie (sous forme de cycle) selon l'invention.

La figure 7 est un diagramme de distribution en coupe longitudinale du champ de température.

La figure 8 est un diagramme de distribution en coupe longitudinale du champ de vitesse.

La figure 9 est un diagramme de distribution en coupe longitudinale du champ de CO.

La figure 10 est un diagramme de distribution en coupe longitudinale du champ de OH.

### Description de modes d'exécution préférés de l'invention

Un mode d'exécution du dispositif de combustion proposé dans la présente invention a été conçu spécifiquement afin de prendre en compte de grandes valeurs de lambda tout en permettant l'apparition de la combustion sans flamme.

### Description de la chambre de combustion

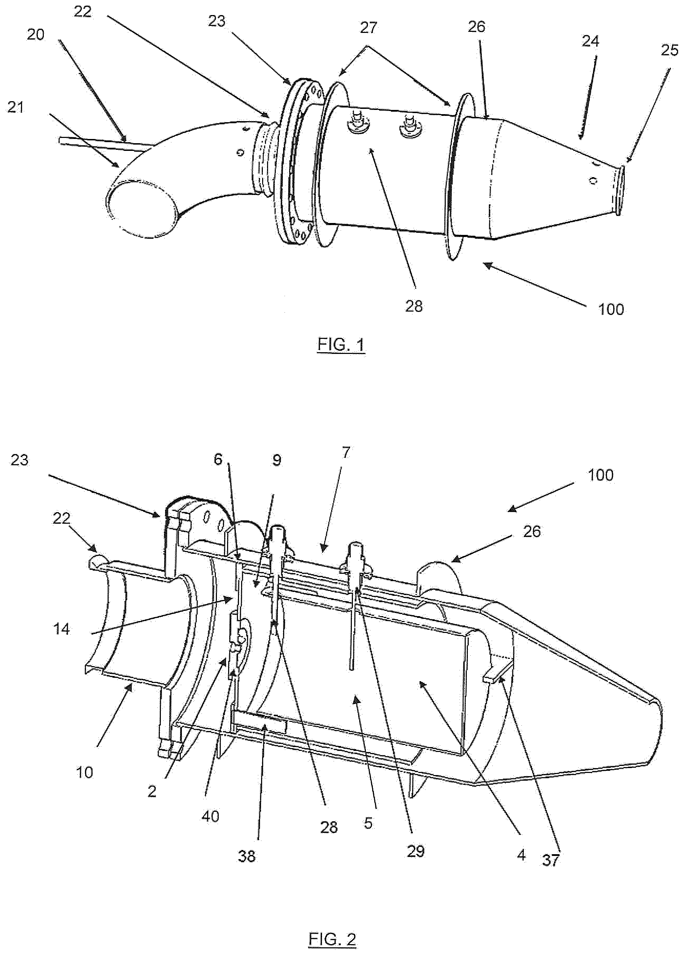

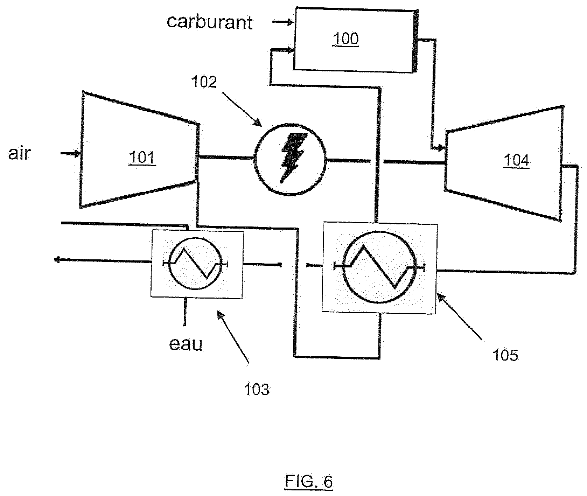

Les figures 1 à 5 montrent un mode de réalisation pour un dispositif de combustion 100 sans flamme qui reçoit de l'air préchauffé provenant d'un récupérateur de chaleur (105, voir figure 6) relié à une turbine, par exemple une micro-turbine, par l'intermédiaire d'un conduit d'alimentation d'air de dimensions et de forme appropriées, typiquement cylindrique, afin de réduire les pertes de charges.

Le conduit d'alimentation en air peut comporter un conduit 21 d'amenée d'air et un conduit d'adaptation 10 permettant la jonction entre ce conduit d'amenée d'air 21 et une première extrémité du dispositif de combustion 100. Habituellement, le conduit d'adaptation 10 comprend à une extrémité une bride 22 de serrage, en particulier une bride en V, assurant la fixation du conduit d'amenée d'air 21 au conduit d'adaptation 10. Le conduit d'adaptation 10 peut comporter à son autre extrémité une bride dite principale 23, qui peut être soudée à un tube de liaison. Le conduit d'adaptation 10 permet l'accès à l'intérieur du dispositif de combustion comme illustré sur la figure 2.

A son autre extrémité, le dispositif de combustion 100 peut être connecté à une volute de la turbine (non représenté) par l'intermédiaire d'un tube conique 24 soudé à un tube externe 26 de la chambre de combustion 100. Une bride de serrage en V 25 peut permettre la jonction avec la volute de la turbine.

Comme illustré sur la figure 2, le dispositif de combustion peut comprendre des raidisseurs 27 soudés sur le tube externe 26, les raidisseurs 27 assurant la rigidité dudit dispositif 100.

La figure 2 montre aussi que l'allumage du dispositif de combustion 100 peut être assuré par une bougie chauffante 28. La bougie 28 traverse le tube externe 26, une chemise tubulaire 7 et un tube de combustion 5, afin de pénétrer dans une zone idéale pour l'allumage du mélange. Cette zone est située de préférence à une distance d'orifices 36 de moyens d'injection d'air équivalente au diamètre moyen défini par une surface interne 31 d'un anneau d'injection 40. De surcroît, cette zone est située de préférence à une distance de l'axe central du tube de combustion 5 d'environ ¾ du diamètre moyen défini par la surface interne 31 de l'anneau d'injection 40.

Le dispositif de combustion 100 peut comprendre un thermocouple 29, de préférence de type K, pénétrant également au coeur du dispositif de combustion 100 afin de mesurer la température de la zone de combustion 4. Il sert de dispositif de sécurité afin d'éviter l'occurrence de températures trop élevées à l'intérieur du tube de combustion 5.

Le dispositif de combustion 100 comprend des moyens d'injection de carburant comportant un tube 20 traversant le conduit 21 d'admission d'air. Ce tube 20 peut être fixé, de préférence soudé, à une tête d'injection de carburant 33. Ce tube 20 permet l'apport du carburant jusqu'à la tête d'injection 33.

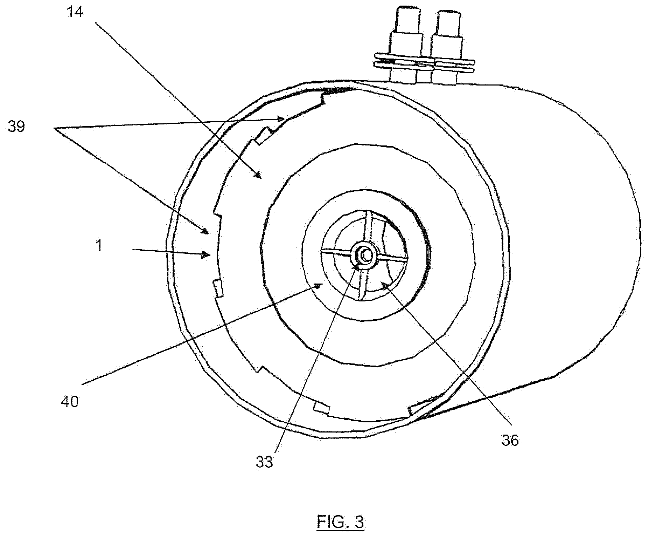

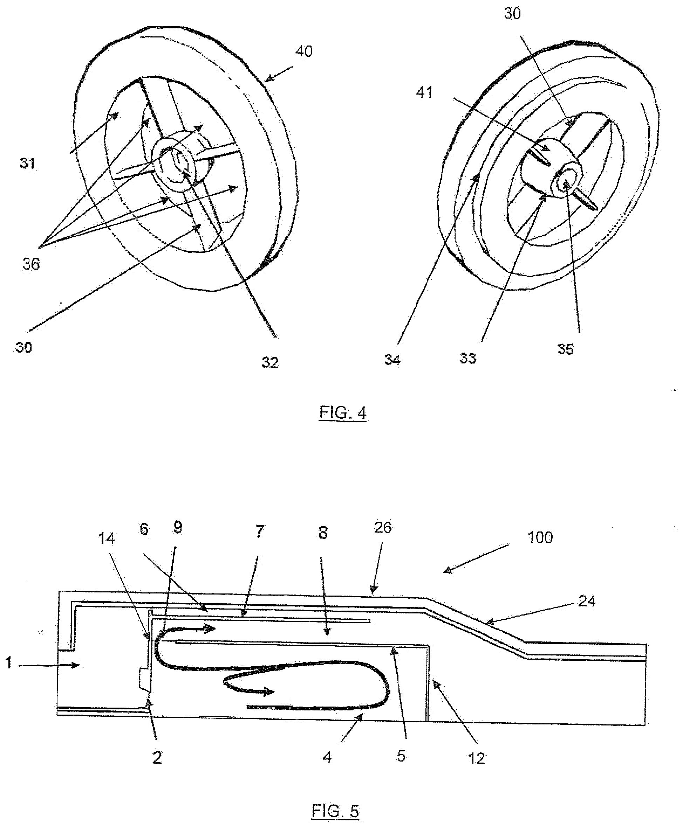

Conformément à l'invention, on utilise une technique de division/séparation du flux d'entrée d'air en deux flux distincts d'air, un flux primaire utilisé pour la combustion et un flux secondaire utilisé pour le refroidissement du mélange. Ainsi, la figure 3 montre que le dispositif de combustion 100 peut comporter un plénum 1 servant à diviser le flux d'air en deux flux : un flux primaire et un flux secondaire. Le flux d'air primaire peut être injecté dans le tube de combustion 5 par le biais des orifices 36 des moyens d'injection d'air. Le flux d'air secondaire passe par le by-pass 6 et se mélange avec le flux primaire en aval (figure 5).

Le by-pass 6 permet le passage du flux secondaire vers la zone aval de mélange. Le by-pass 6 peut comporter des ouvertures 39, par exemple des encoches, dont la surface permet le réglage du ratio entre le flux primaire et le flux secondaire. Typiquement, ce ratio est égal à 1 afin d'atteindre un lambda maximum de 4 au sein de la zone de combustion 4.

La figure 4 illustre plus précisément la façon dont les moyens d'injection d'air et de carburant peuvent être combinés. Dans cette configuration, les moyens d'injection d'air comprennent l'anneau d'injection 40 présentant une surface interne 31 de forme sensiblement conique. Selon ce mode avantageux de réalisation, la face de l'anneau d'injection 40 orientée vers le tube de combustion 5 présente un épaulement 34 afin de faciliter l'emboîtement dans une paroi de fermeture 14, par exemple une plaque, du tube de combustion 5. La tête d'injection de carburant 33 peut présenter une surface externe 41 de forme conique s'étendant sur la majorité de sa longueur. La tête d'injection de carburant 33 peut être maintenue au centre de l'anneau d'injection 40 par des bras profilés 30 reliés à l'anneau d'injection 40. La surface externe 41 de la tête d'injection 33 de carburant peut délimiter au moins en partie la surface externe des orifices 36 d'injection d'air. Le profilage des bras 30 permet de réduire la perte de charge produite par l'écoulement de l'air dans les orifices 36 d'injection d'air. La surface interne conique 31 présente un angle tel que le flux d'air primaire converge vers la zone de combustion. Les angles de la surface interne 31 de l'anneau d'injection 40 et de la surface externe 41 de la tête d'injection 33 assurent la formation de conduits dont la section est convergente en direction de la zone de combustion 4. Le tube d'injection de carburant 20 est soudé à la tête d'injection 33 au niveau d'un évidement ou épaulement 32 formé dans cette dernière, afin d'assurer une liaison étanche. Le carburant, de préférence du gaz, est éjecté par l'orifice d'injection 35. De préférence, les moyens pour une injection combinée (c'est-à-dire air et carburant) peuvent être fabriqués par un procédé d'impression 3D additive (par ex. DMLM, acronyme pour *Direct Métal Laser Melting,* ou fusion directe du métal par laser) en matériau réfractaire, par exemple des alliages à base nickel ou cobalt ou des aciers réfractaires. Alternativement, d'autres procédés sont possibles tels que l'usinage, MIM (acronyme pour *Metal Injection Moulding*, ou moulage par injection de poudre), etc.

Comme illustré sur la figure 4, l'air et le carburant sont respectivement injectés via les orifices d'air 36 et de carburant 35 dans le tube de combustion 5. Celui-ci présente une forme cylindrique fermée à son extrémité par un fond 12. Pour obtenir un régime de combustion sans flamme, la vitesse du flux d'air doit être comprise entre 60 et 120 m/s. Les gaz de combustion s'échappent de la zone de recombinaison 4 par une ou plusieurs ouvertures 9, par exemple une fente. Une partie du fluide recircule cependant dans la zone de combustion. Le taux de recirculation calculé sur base de la formule $mE/(mA + mF)$ supérieur à 1,3, où $mE$, $mA$ et $mF$ représentent respectivement les débits massiques des gaz brûlés et recirculés dans la zone de combustion 4, d'air et de fuel introduits dans la zone de combustion 4. C'est notamment cette recirculation importante des gaz qui permet la dilution de l'oxygène et du fuel et qui conduit à l'apparition du régime de combustion sans flamme. La dimension des ouvertures 9 permet de contrôler le niveau de recirculation. Des pièces métalliques 37, 38 (voir figure 2) peuvent être utilisées pour assurer le positionnement du tube de combustion 5 dans le tube externe 26 tout en fixant la section de passage des ouvertures 9 (dans l'exemple représenté une fente 9). Une des pièces 37, 38 peut être soudée au tube externe 26 et ainsi permettre au tube de combustion 5 de se dilater librement.

Il est apparu aux inventeurs, d'abord expérimentalement puis par vérification numérique, que l'ajout d'une chemise tubulaire 7 permet de fortement réduire le taux de CO dans les gaz de combustion en aval du dispositif de combustion 100, et ce lorsque le dispositif de combustion 100 comprend également un by-pass 6. La chemise tubulaire 7 est une tube ouvert concentrique avec le tube de combustion 5. Cette chemise tubulaire 7 permet d'éviter un mélange trop rapide entre le flux primaire et le flux secondaire. Ainsi la température du flux primaire reste élevée et la réaction de recombinaison du CO en $CO_2$ peut se poursuivre plus loin dans la zone 8 dit de recombinaison. La concentration en CO dans les gaz de combustion peut être ainsi réduite par un facteur d'environ 10. La longueur de la chemise tubulaire 7 impacte donc la recombinaison du CO et peut avantageusement être optimisée par calcul. En tout état de cause, elle en général au minium de 50 % de la longueur du tube de combustion 5. De préférence, la chemise tubulaire 7 est fixée à la paroi de fermeture 14.

Le tube de combustion 5 subit des températures extrêmes de l'ordre de 1050°C à 1150°C. Différents alliages métalliques sont utilisables pour les tubes radiatifs en traitement thermique tels que 602CA®, 310S, Inconel® 625, et de préférence l'alliage fer ferritique-chrome-aluminium Kanthal®APM. Il est à noter que le tube de combustion 5 peut présenter également un fond hémisphérique ou une autre forme permettant d'améliorer la recirculation des gaz et la perte de charge dans le dispositif de combustion.

Les autres pièces du dispositif de combustion 100 dont par exemple le tube externe 26, la conduite d'adaptation 10, les brides 22, 23 et la chemise tubulaire 7 peuvent être en acier 310S. Le matériau doit permettre, comme pour tout autre dispositif de combustion, l'installation d'une couche de protection contre l'oxydation et la corrosion à haute température. Les tubes de combustion 5 et externe 26 sont de préférence de forme cylindrique.

Description de l'appareil de production d'électricité ou de cogénération d'énergie

Le dispositif de combustion 100 sans flamme peut être associé à une application à micro-turbine et notamment destiné à la production d'électricité ou de chaleur en cogénération. L'appareil de production d'électricité ou de cogénération peut comprendre plusieurs éléments modulaires (voir figure 6). L'appareil comprend au moins un turbogénérateur et un dispositif de combustion 100 qui sont combinés avec un ou plusieurs éléments suivants : un récupérateur de chaleur 105, un système d'électronique de puissance (non représenté), un échangeur de chaleur gaz-eau (ou air-eau) 103, un ensemble d'auxiliaires (non représenté).

Le turbogénérateur comporte un compresseur 101, une turbine 104, par exemple une micro-turbine, un générateur électrique 102 de préférence à aimant permanent, l'ensemble fixé sur un même arbre. De préférence, les paliers de l'arbre peuvent comporter deux roulements aérodynamiques radiaux ne nécessitant aucune lubrification à base d'un lubrifiant liquide ou solide tel que de l'huile. De surcroît, le turbogénérateur peut comporter un roulement aérodynamique axial destiné à compenser la force axiale du couple compresseur-turbine. Le générateur électrique 102 peut être positionné à l'avant du compresseur 101 en porte-à-faux (non représenté). Cette configuration permet d'obtenir un arbre très compact. Le stator électrique est alors fixé à la volute du compresseur. Un espace suffisant entre le générateur électrique et le stator permet enfin l'aspiration de l'air par le compresseur 101.

Le récupérateur de chaleur 105 peut comprendre un échangeur de chaleur destiné à récupérer l'énergie utile présente dans les gaz d'échappement de la turbine 104 afin de préchauffer l'air comprimé par le compresseur 101, qui alimentera le dispositif de combustion 100.

Le système d'électronique de puissance (non représenté) peut être configuré de telle sorte qu'il permette la conversion de courant alternatif à haute fréquence produit par le générateur 102 (moteur à courant alternatif synchrone, en particulier à aimant permanent) en courant continu afin qu'il soit injecté sur le réseau électrique par l'intermédiaire d'un onduleur, par exemple du type de ceux utilisés pour les applications solaires.

Un échangeur de chaleur 103 gaz-eau (ou air-eau) peut être placé en sortie de l'appareil de cogénération afin de récupérer l'énergie des gaz d'échappement pour chauffer de l'eau ou produire de la vapeur en mode cogénération. Plusieurs échangeurs peuvent être utilisés. De surcroît, chaque échangeur de chaleur gaz-eau peut être positionné à d'autres endroits de l'appareil de cogénération nécessitant un refroidissement.

L'ensemble d'auxiliaires assure la fonction de compression et de régulation du flux du carburant par exemple gazeux pour l'injection dans le dispositif de combustion 100 ainsi que des systèmes pour le refroidissement par eau du stator électrique et éventuellement du support des paliers aérodynamiques.

On entend par micro-turbine, une turbine d'une puissance de 5 kW à 750kW, de préférence de 25 à 500kW. Typiquement, ces turbines sont montées sur des moteurs à combustion à piston pour assurer leur suralimentation.

Résultats de simulation

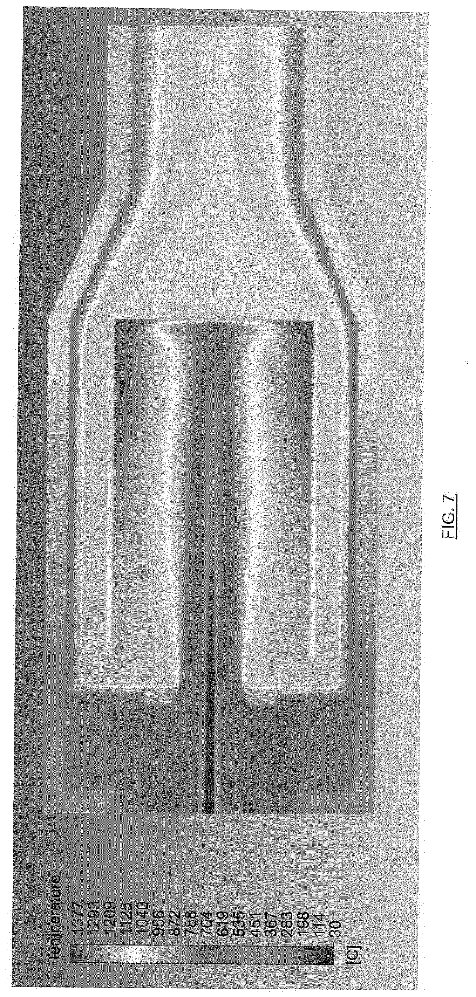

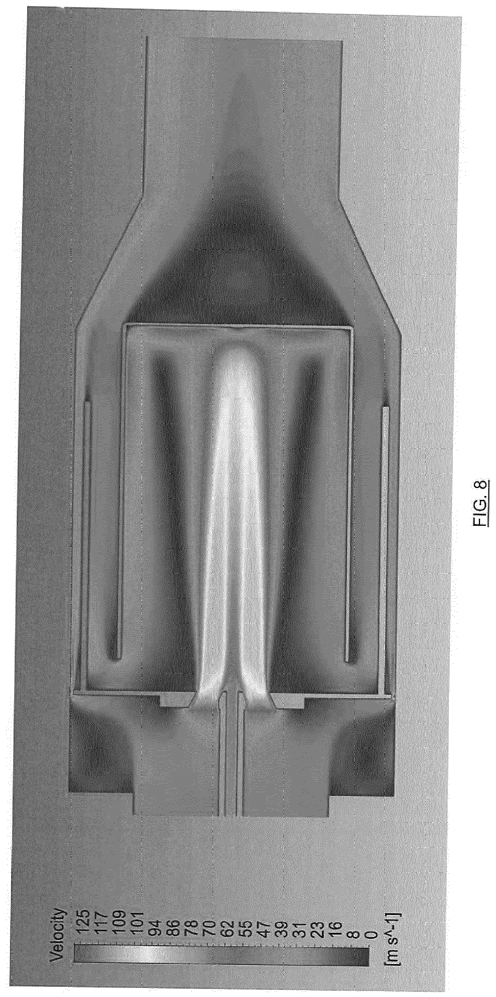

Les résultats de simulation sont présentés aux figures 7, 8, 9 et 10. Celles-ci ont été réalisées avec le logiciel ANSYS 2020 R1. L'approche consiste à résoudre les équations de Navier-Stokes (RANS) axisymétrique en prenant l'hypothèse d'un écoulement incompressible stationnaire. La modélisation numérique utilise un solveur incompressible de type Pressure Based, équipés d'un modèle de turbulence adéquat (par exemple standard k-$\varepsilon$ avec la première constante $C_{1\varepsilon}$ égale à 1.6), un modèle de radiation (*Discrète Ordinate Method*), une modèle d'interaction de la turbulence avec les équations de convexion-diffusion des espèces chimiques spécifiquement adapté à la combustion sans flamme (*Eddy Dissipation Concept* couplé au modèle *Partially Stirred Reactor model*, PaSR) et un modèle de gaz réactif (par exemple KEE58, GRI 2.11, etc.). Les simulations sont réalisées à l'issue d'une étude de convergence en maillage permettant de démontrer que la qualité des résultats devient suffisamment indépendante du maillage utilisé.

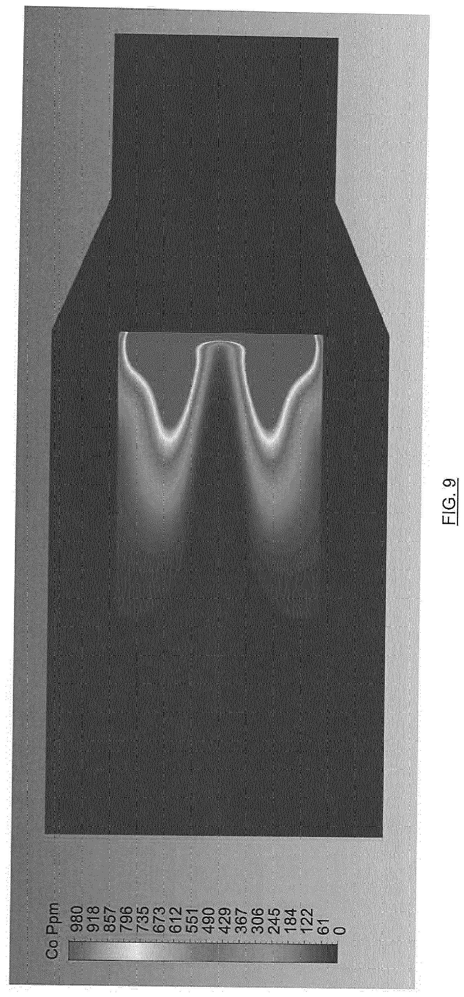

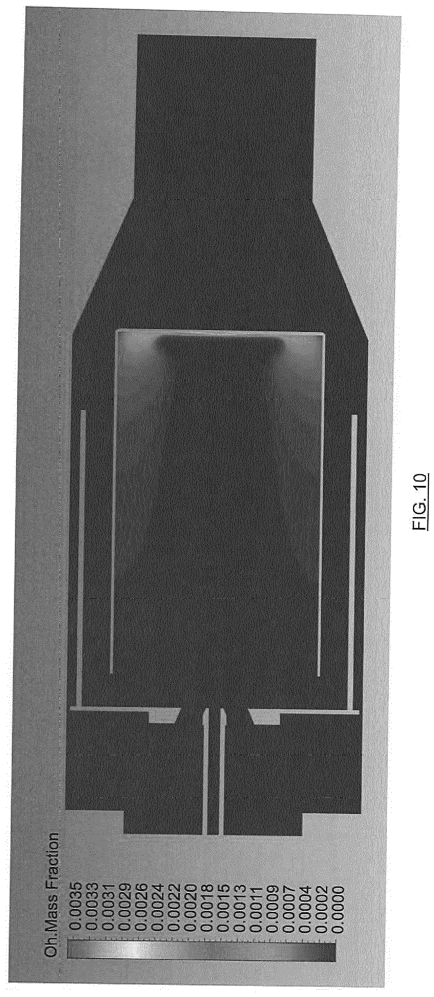

La simulation du champ de température (figure 7) montre que la température maximale atteinte ne dépasse pas 1380°C, ce qui est largement inférieur au seuil déclenchant la production de NOx. La zone de combustion est cantonnée dans le fond du tube de combustion et relativement dispersée comme en témoigne la figure 10 présentant la distribution des radicaux OH. Par ailleurs, la concentration en CO très importante dans la zone de combustion se réduit très fortement sous l'effet de la recombinaison du CO en CO2 (figure 9). Les valeurs d'émissions prédites en l'espèce sont :

$$NOx = 1{,}43 \text{ ppm} ;$$

$$CO = 0{,}50 \text{ ppm}.$$

Un banc d'essai a été mis en place en parallèle afin de mesurer les performances de la chambre de combustion sans flamme selon la présente invention. Celui-ci est équipé d'un réchauffeur d'air électrique de 30kW permettant d'assurer le préchauffage de l'air en entrée de la chambre de combustion. Les mesures d'émissions sont réalisées à l'aide d'un Testo 350, celui-ci permet des mesures de CO (0-10000ppm) et NO de (0-4000ppm). Le débit d'air est mesuré à l'aide d'un débimètre volumétrique de marque GasView avec $\pm 3\%$ d'erreur de précision à fond d'échelle. Le débit de gaz est ajusté avec un contrôleur de débit de type Elflow présentant une précision à fond d'échelle de $\pm 0.5\%$. Les résultats principaux de mesure sont résumés dans le tableau 1.

Tableau 1 : Mesure des émissions

| Emissions | Mesures mg/kWh à 0% O2 [1] |
|---|---|
| CO | < 10[2] |
| NOx | 3,43 |
| (1) Débit d'air 25g/s, température de l'air 650°C (2) Test de gas selon EN 437 | |

Liste des symboles de référence

| 1 | Plénum |
|---|---|
| 2 | Injecteur |
| 4 | Zone de combustion |
| 5 | Tube de combustion |
| 6 | By-pass |
| 7 | Chemise tubulaire |
| 8 | Zone de recombinaison |
| 9 | Ouverture(s), fente |
| 10 | Conduit d'alimentation d'air, conduit d'adaptation |
| 12 | Fond |
| 14 | Paroi de fermeture, plaque |
| 20 | Tube d'injection de carburant |
| 21 | Conduit d'alimentation d'air, conduit d'amenée d'air |
| 22 | Bride |
| 23 | Bride principale |
| 24 | Tube conique |
| 25 | Bride |
| 26 | Tube externe |
| 27 | Raidisseur(s) |
| 28 | Bougie |
| 29 | Thermocouple |
| 30 | Bras profilés |
| 31 | Surface interne de l'anneau d'injection |
| 32 | Evidement |
| 33 | Tête d'injection, élément de guidage |
| 34 | Epaulement |
| 35 | Orifice d'injection de carburant |
| 36 | Orifice d'injection d'air |
| 37 | Pièce métallique de positionnement |
| 38 | Pièce métallique de positionnement |
| 39 | Ouverture(s) de by-pass, encoches |
| 40 | Anneau d'injection |
| 41 | Surface externe de l'élément de guidage |
| 100 | Dispositif de combustion |
| 101 | Compresseur |
| 102 | Générateur d'électricité |
| 103 | Echangeur de chaleur |
| 104 | Turbine |
| 105 | Récupérateur de chaleur (échangeur pour préchauffage) |

**Revendications**

1. Dispositif de combustion (100) pour un appareil de production d'électricité ou de cogénération d'énergie, ledit appareil comprenant une turbine à gaz, en particulier une micro-turbine à gaz, alimentée par ledit dispositif, ledit dispositif étant adapté pour un régime de combustion du type « sans flamme », et comprenant :

- un tube externe (26) ;

- un tube de combustion (5), formant une zone de combustion (4) adaptée pour la combustion sans flamme d'un mélange d'air comburant et de carburant, ledit tube de combustion (5) étant concentrique avec le tube externe (26), en communication avec des moyens d'injection de carburant et des moyens d'injection d'air, disposés à une première extrémité du tube de combustion (5), dite extrémité avant, et fermé par un fond (12) à une seconde extrémité du tube de combustion (5), dite extrémité arrière, ledit fond (12) étant solidaire dudit tube de combustion (5) et étanche ;
- les moyens d'injection de carburant comportant au moins un premier orifice (35), dit orifice d'injection de carburant ;
- les moyens d'injection d'air comportant au moins un second orifice (36), dit orifice d'injection d'air ;
- des moyens d'évacuation des gaz de combustion ;
- une paroi de fermeture (14) couvrant l'extrémité avant du tube de combustion (5) et connectée aux moyens d'injection d'air et de carburant ;
- le tube de combustion (5) étant sensiblement de forme cylindrique en un seul volume interne, apte à permettre la recirculation des gaz dans un régime de combustion sans flamme ;
- les moyens d'évacuation de gaz de combustion comprenant au moins une ouverture (9) disposée à l'extrémité avant du tube de combustion (5) sensiblement de forme cylindrique, ladite ouverture (9) étant délimitée d'une part par une extrémité de la paroi cylindrique longitudinale du tube de combustion (5) proximale de la paroi de fermeture (14) et d'autre part par ladite paroi de fermeture (14), l'écoulement et l'évacuation des gaz de combustion étant assurés entre ladite paroi longitudinale (5) et le tube externe (26) ;

**caractérisé par** :

- une chemise tubulaire (7) disposée concentriquement entre le tube de combustion (5) et le tube externe (26), connectée à la paroi de fermeture (14) et positionnée en vis-à-vis de l'ouverture (9) des moyens d'évacuation, pour former une zone annulaire, dite zone de recombinaison (8), permettant de prolonger le temps de séjour des gaz de combustion s'échappant par l'ouverture (9).

2. Dispositif de combustion (100) selon la revendication 1, **caractérisé en ce que** le tube externe (26) délimite au moins en partie avec la chemise tubulaire (7) un passage annulaire, dit by-pass (6), permettant le passage d'un flux d'air de dilution apte à se mélanger avec les gaz de combustion en aval de la zone de recombinaison (8), la paroi de fermeture (14) comprenant une ou plusieurs ouvertures (39), dites ouvertures de by-pass, aménagées dans sa périphérie et par lesquelles le flux d'air de dilution entre dans le by-pass (6).

3. Dispositif de combustion (100) selon la revendication 1, caractérisé en que la chemise tubulaire (7) s'étend axialement sur au moins 50% de la longueur du tube de combustion (5).

4. Dispositif de combustion (100) selon l'une quelconque des revendications précédentes, comprenant un plénum (1) de forme cylindrique formé en partie par une portion du tube externe (26) et par la paroi de fermeture (14), ladite portion étant disposée à une extrémité avant du tube externe (26), ladite paroi de fermeture (14) formant un fond dudit plénum (1).

5. Dispositif de combustion (100) selon la revendication 4, caractérisé en que le plénum (1) est connecté fluidiquement à un conduit d'alimentation d'air (10, 21).

6. Dispositif de combustion (100) selon l'une quelconque des revendications précédentes, **caractérisé en ce que** l'ouverture (9) des moyens d'évacuation de gaz de combustion est une ouverture annulaire formée entre la paroi de fermeture (14) et le bord avant du tube de combustion (5).

7. Dispositif de combustion (100) selon l'une quelconque des revendications précédentes, **caractérisé en ce que** l'orifice (35) d'injection de carburant est un orifice centré par rapport au tube de combustion (5).

8. Dispositif de combustion (100) selon l'une quelconque des revendications précédentes, **caractérisé en ce que** les moyens d'injection de carburant comportent une tête d'injection (33) dans laquelle l'orifice (35) d'injection de carburant est formé.

9. Dispositif de combustion (100) selon la revendication 8, **caractérisé en ce que** les moyens d'injection de carburant comportent un tube d'injection (20) de carburant dont l'extrémité arrière est solidaire de la tête d'injection (33).

10. Dispositif de combustion (100) selon la revendication 9 en combinaison avec la revendication 5, **caractérisé en ce que** le conduit d'alimentation d'air (10, 21) et le tube d'injection (20) de carburant sont sur une partie de leur longueurs respectives, disposés de manière coaxiale.

**11.** Dispositif de combustion (100) selon l'une quelconque des revendications précédentes, **caractérisé en ce que** l'orifice (36) d'injection d'air est constitué de plusieurs orifices (36) disposés dans la paroi de fermeture (14).

**12.** Utilisation du dispositif de combustion (100) selon l'une quelconque des revendications précédentes, dans laquelle un flux d'air est injecté dans le dispositif avec une vitesse comprise entre 60 et 120m/s, de manière à obtenir un taux de recirculation des fluides mE/(mA+mF) supérieur à 1,3, où mE, mA et mF représentent respectivement les débits massiques des gaz brûlés et recirculés dans la zone de combustion, et d'air comburant et de carburant introduits dans la zone de combustion (4).

**13.** Appareil de production d'électricité ou de cogénération d'énergie comportant un dispositif de combustion (100) selon l'une quelconque des revendications 1 à 11.

**14.** Appareil de production d'électricité ou de cogénération d'énergie selon la revendication 13, comprenant un échangeur de chaleur (105) permettant de récupérer l'énergie thermique des gaz de combustion produite dans le dispositif de combustion (100), pour préchauffer l'air d'admission alimentant le dispositif de combustion (100).

**15.** Appareil de production d'électricité ou de cogénération d'énergie selon la revendication 13 ou 14, dans lequel l'échangeur de chaleur (105) comprend un premier circuit en communication fluidique avec une section aval d'une turbine (104), en particulier une micro-turbine, et un deuxième circuit en communication fluidique avec une section amont du dispositif de combustion (100).

## Patentansprüche

**1.** Verbrennungsvorrichtung (100) für eine Stromerzeugungs- oder Kraft-Wärme-Kopplungsvorrichtung, die Vorrichtung umfassend eine Gasturbine, insbesondere eine Mikrogasturbine, die von der Vorrichtung gespeist wird, wobei die Vorrichtung für einen Verbrennungsbetrieb vom Typ "ohne Flamme" angepasst ist und umfassend:

- ein äußeres Rohr (26);
- ein Verbrennungsrohr (5), das eine Verbrennungszone (4) bildet, die für die flammenlose Verbrennung eines Gemischs aus Verbrennungsluft und Kraftstoff angepasst ist, wobei das Verbrennungsrohr (5) konzentrisch mit dem äußeren Rohr (26) ist, das mit Kraftstoffeinspritzeinrichtungen und Lufteinspritzeinrichtungen in Verbindung ist, die an einem ersten Ende des Verbrennungsrohrs (5), genannt vorderes Ende, angeordnet sind und an einem zweiten Ende des Verbrennungsrohrs (5), genannt hinteres Ende, durch einen Boden (12) verschlossen sind, wobei der Boden (12) fest mit dem Verbrennungsrohr (5) verbunden und dicht ist;
- wobei die Kraftstoffeinspritzeinrichtungen mindestens eine erste Öffnung (35), genannt Kraftstoffeinspritzöffnung, umfassen;
- die Lufteinspritzeinrichtungen mindestens eine zweite Öffnung (36), genannt Lufteinspritzöffnung, umfassen;
- Verbrennungsgasabzugseinrichtungen;
- eine Verschlusswand (14), die das vordere Ende des Verbrennungsrohrs (5) abdeckt und mit den Luft- und Kraftstoffeinspritzeinrichtungen verbunden ist;
- wobei das Verbrennungsrohr (5) im Wesentlichen eine zylindrische Form in einem einzigen Innenvolumen aufweist, das angepasst ist, um die Rezirkulation der Gase in einem flammenlosen Verbrennungsbetrieb zu ermöglichen;
- die Verbrennungsgasabzugseinrichtungen umfassend mindestens eine Öffnung (9), die an dem vorderen Ende des im Wesentlichen zylinderförmigen Verbrennungsrohrs (5) angeordnet ist, wobei die Öffnung (9) einerseits durch ein Ende der zylindrischen Längswand des Verbrennungsrohrs (5) proximal zu der Verschlusswand (14) und andererseits durch die Verschlusswand (14) begrenzt ist, wobei die Strömung und der Abzug der Verbrennungsgase zwischen der Längswand (5) und dem äußeren Rohr (26) gewährleistet sind;

**gekennzeichnet durch**:

- einen rohrförmigen Mantel (7), der konzentrisch zwischen dem Verbrennungsrohr (5) und dem äußeren Rohr (26) angeordnet ist, mit der Verschlusswand (14) verbunden ist und gegenüber der Öffnung (9) der Abzugseinrichtungen positioniert ist, um eine ringförmige Zone, die sogenannte Rekombinationszone (8), zu bilden, die es ermöglicht, die Verweilzeit der Verbrennungsgase zu verlängern, die durch die Öffnung (9) entweichen.

**2.** Verbrennungsvorrichtung (100) nach Anspruch 1, **dadurch gekennzeichnet, dass** das äußere Rohr (26) zumindest teilweise mit dem rohrförmigen Mantel (7) einen ringförmigen Durchgang, genannt Bypass (6), begrenzt, der den Durchgang eines Verdünnungsluftstroms ermöglicht, der sich mit den Verbrennungsgasen stromabwärts von der Rekombinationszone (8) vermischen kann, die Verschlusswand (14) umfassend eine oder mehrere Öffnungen (39), sogenannte Bypass-Öffnungen, die in ihrem Umfang angeordnet sind und durch die der Verdünnungsluftstrom in den Bypass (6) eintritt.

3. Verbrennungsvorrichtung (100) nach Anspruch 1, **dadurch gekennzeichnet, dass** sich der rohrförmige Mantel (7) axial über mindestens 50 % der Länge des Verbrennungsrohrs (5) erstreckt.

4. Verbrennungsvorrichtung (100) nach einem der vorherigen Ansprüche, umfassend ein zylinderförmiges Plenum (1), das teilweise durch einen Abschnitt des äußeren Rohrs (26) und durch die Verschlusswand (14) gebildet ist, wobei der Abschnitt an einem vorderen Ende des äußeren Rohrs (26) angeordnet ist und die Verschlusswand (14) einen Boden des Plenums (1) bildet.

5. Verbrennungsvorrichtung (100) nach Anspruch 4, **dadurch gekennzeichnet, dass** das Plenum (1) fluidisch mit einem Luftzufuhrkanal (10, 21) verbunden ist.

6. Verbrennungsvorrichtung (100) nach einem der vorherigen Ansprüche, **dadurch gekennzeichnet, dass** die Öffnung (9) der Verbrennungsgasabzugseinrichtungen eine ringförmige Öffnung ist, die zwischen der Verschlusswand (14) und dem vorderen Rand des Verbrennungsrohrs (5) gebildet ist.

7. Verbrennungsvorrichtung (100) nach einem der vorherigen Ansprüche, **dadurch gekennzeichnet, dass** die Öffnung (35) zur Kraftstoffeinspritzung eine in Bezug auf das Verbrennungsrohr (5) zentrierte Öffnung ist.

8. Verbrennungsvorrichtung (100) nach einem der vorherigen Ansprüche, **dadurch gekennzeichnet, dass** die Kraftstoffeinspritzeinrichtungen einen Einspritzkopf (33) aufweisen, in dem die Öffnung (35) zur Kraftstoffeinspritzung gebildet ist.

9. Verbrennungsvorrichtung (100) nach Anspruch 8, **dadurch gekennzeichnet, dass** die Kraftstoffeinspritzeinrichtungen ein Einspritzrohr (20) des Kraftstoffs aufweisen, dessen hinteres Ende fest mit dem Einspritzkopf (33) verbunden ist.

10. Verbrennungsvorrichtung (100) nach Anspruch 9 in Verbindung mit Anspruch 5, **dadurch gekennzeichnet, dass** der Luftzufuhrkanal (10, 21) und das Einspritzrohr (20) des Kraftstoffs über einen Teil ihrer jeweiligen Längen koaxial angeordnet sind.

11. Verbrennungsvorrichtung (100) nach einem der vorherigen Ansprüche, **dadurch gekennzeichnet, dass** die Öffnung (36) zur Lufteinspritzung aus mehreren Öffnungen (36) besteht, die in der Verschlusswand (14) angeordnet sind.

12. Verwendung der Verbrennungsvorrichtung (100) nach einem der vorherigen Ansprüche, wobei ein Luftstrom mit einer Geschwindigkeit zwischen 60 und 120 m/s in die Vorrichtung eingespritzt wird, um eine Rezirkulationsrate der Fluide mE/(mA+mF) von mehr als 1,3 zu erlangen, wobei mE, mA und mF jeweils den Massendurchsatz der verbrannten und in der Verbrennungszone rezirkulierten Gase und der in die Verbrennungszone (4) eingeleiteten Verbrennungsluft und des Kraftstoffs darstellen.

13. Stromerzeugungs- oder Kraft-Wärme-Kopplungsvorrichtung, die eine Verbrennungsvorrichtung (100) nach einem der Ansprüche 1 bis 11 aufweist.

14. Stromerzeugungs- oder Kraft-Wärme-Kopplungsvorrichtung nach Anspruch 13, umfassend einen Wärmetauscher (105), der eine Rückgewinnung von Wärmeenergie aus den in der Verbrennungsvorrichtung (100) erzeugten Verbrennungsgasen ermöglicht, um die Ansaugluft vorzuwärmen, die der Verbrennungsvorrichtung (100) zugeführt wird.

15. Stromerzeugungs- oder Kraft-Wärme-Kopplungsvorrichtung nach Anspruch 13 oder 14, wobei der Wärmetauscher (105) einen ersten Kreislauf in Fluidverbindung mit einem stromabwärtigen Abschnitt einer Turbine (104), insbesondere einer Mikroturbine, und einen zweiten Kreislauf in Fluidverbindung mit einem stromaufwärtigen Abschnitt der Verbrennungsvorrichtung (100) umfasst.

## Claims

1. A combustion device (100) for an electricity production or energy cogeneration apparatus, said apparatus comprising a gas turbine, in particular a micro gas turbine supplied by said device, the combustion device being suitable for a flameless combustion regime, and comprising:

   - an outer tube (26);
   - a combustion tube (5) forming a combustion zone (4) for flameless combustion of a mixture of oxidizing air and fuel, the combustion tube (5) being concentric with the outer tube (26), in communication with fuel-injection means and air-injection means arranged at a first end of the combustion tube (5), referred to as a front end, and which is closed by an end wall (12) at a second end of the combustion tube, referred to as a rear end, said end wall (12) being integral with and sealed to said combustion tube (5);
   - the fuel-injection means comprising at least a first orifice (35), referred to as a fuel-injection orifice;

- the air-injection means comprising at least a second orifice (36), referred to as an air-injection orifice;

- means for discharging combustion gases;

- a closure wall (14) covering the front end of the combustion tube (5) and connected to the air-injection and fuel-injection means,

- the combustion tube (5) being substantially a cylinder with a single internal volume configured to allow the combustion gases to recirculate in the flameless combustion regime,

- the means for discharging the combustion gases comprising at least one opening (9) arranged at the front end of the combustion tube (5), which is substantially cylindrical in shape, said opening (9) being delimited on one side by an end of the longitudinal cylindrical wall of the combustion tube (5) proximal to the closure wall (14) and on the other side by said closure wall (14), with the flow and evacuation of combustion gases being ensured between said longitudinal wall (5) and the external tube (26);

**characterized by** a tubular sleeve (7) arranged concentrically between the combustion tube (5) and the outer tube (26), connected to the closure wall (14) and positioned facing the opening (9) of the evacuation means so as to form an annular combustion zone (8), to extend a residence time of the combustion gases exhausted via the opening (9).

2. The combustion device (100) of claim 1, wherein the outer tube (26) delimits, at least in part with the combustion tube (7), an annular passage referred to as a bypass (6), allowing passage of a flow of dilution air to mix with the combustion gases downstream of the combustion zone (8), the closure wall (14) comprising one or several openings (39), referred to as bypass openings, formed in a periphery thereof and via which the flow of dilution air enters the bypass (6).

3. The combustion device (100) of claim 1, **characterized in that** the tubular sleeve (7) extends axially over at least 50% of a length of the combustion tube.

4. The combustion device (100) according to any one of the preceding claims, further comprising: a plenum (1) of cylindrical shape formed in part by a portion of the outer tube (26) and by the closure wall (14), the portion being arranged at a front end of the outer tube (26), the closure wall (14) forming an end wall of the plenum (1).

5. The combustion device (100) according to claim 4, wherein the plenum (1) is fluidically connected to an air-supply duct (10,21).

6. The combustion device (100) according to any one of the preceding claims, **characterized in that** the opening (9) of the combustion gases discharge means is an annular opening formed between the closure wall (14) and the front edge of the combustion tube (5).

7. The combustion device according to any one of the preceding claims, **characterized in that** the fuel-injection orifice (35) is an orifice centered with respect to the combustion tube.

8. The combustion device (100) according to any one of the preceding claims, **characterized in that** the fuel-injection means comprise an injection head (33) in which the fuel-injection orifice (35) is formed.

9. The combustion device (100) according to claim 8, **characterized in that** the fuel-injection means comprise a fuel-injection tube (20), a rear end of which is secured to the injection head (33).

10. The combustion device (100) according to claim 9 in combination with claim 5, **characterized in that** the air-supply duct (10,21) and the fuel-injection tube (20) are, over part of their respective lengths, arranged coaxially.

11. The combustion device (100) according to any one of the preceding claims, **characterized in that** the air-injection orifice (36) comprises several orifices arranged in the closure wall (14).

12. Use of the combustion device (100) according to any one of the preceding claims, in which a flow of air is injected into the combustion device with a velocity of between 60 and 120 m/s, so as to obtain fluid recirculation rate mE/(mA+mF) greater than 1.3, where meE, mA and mF represent the mass flow rates of the burned and recirculated gases in the combustion zone, and of the oxidizing air and fuel introduced into the combustion zone (4), respectively.

13. Electricity generation apparatus comprising a combustion device (100) according to any one of the claims 1 to 11.

14. The electricity-production or energy-cogeneration apparatus of claim 13, further comprising; a heat exchanger (105) configured to recuperate heat energy from the combustion gases produced in the combustion device (100) in order to preheat intake air supplied to the combustion device (100).

15. The electricity-production or energy-cogeneration apparatus of claim 13 or 14 in which the heat exchanger (105) comprises a first circuit in fluidic communication with a section downstream of a turbine (104), in particular a microturbine (104), and a second circuit in fluidic communication with a section upstream of the combustion device (100).

FIG. 1

FIG. 2

FIG. 3

FIG. 4

FIG. 5

carburant

100

102

air

101

104

eau

103

105

FIG. 6

FIG. 7

FIG. 8

FIG. 9

FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2003091626 A
- CN 105299692 A

- CN 105299692 B
- CN 203907671 U